(19) **Europäisches Patentamt European Patent Office Office européen des brevets**

(11) **EP 4 077 083 B1**

(12) **EUROPEAN PATENT SPECIFICATION**

(45) Date of publication and mention of the grant of the patent:
**03.07.2024 Bulletin 2024/27**

(21) Application number: **19835276.7**

(22) Date of filing: **18.12.2019**

(51) International Patent Classification (IPC):
*B60W 30/095* (2012.01)   *B60W 30/18* (2012.01)
*B60W 60/00* (2020.01)

(52) Cooperative Patent Classification (CPC):
**B60W 30/0956; B60W 30/18145; B60W 30/18159; B60W 60/00274;** B60W 2300/125; B60W 2552/00; B60W 2552/30; B60W 2554/4042; B60W 2554/801; B60W 2554/806; B60W 2555/20; B60W 2556/45; B60W 2556/65

(86) International application number:
**PCT/EP2019/086028**

(87) International publication number:
**WO 2021/121581 (24.06.2021 Gazette 2021/25)**

(54) **A METHOD FOR PROVIDING A POSITIVE DECISION SIGNAL FOR A VEHICLE**

VERFAHREN ZUR ERZEUGUNG EINES POSITIVEN ENTSCHEIDUNGSSIGNALS FÜR EIN FAHRZEUG

PROCÉDÉ DE FOURNITURE D'UN SIGNAL DE DÉCISION POSITIVE POUR UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.10.2022 Bulletin 2022/43**

(73) Proprietor: **VOLVO TRUCK CORPORATION 405 08 Göteborg (SE)**

(72) Inventors:
• **BERGQUIST, Stefan 417 26 Göteborg (SE)**
• **WIBERG, Wilhelm 436 39 Askim (SE)**

(74) Representative: **Valea AB Box 1098 405 23 Göteborg (SE)**

(56) References cited:
WO-A1-2017/200757   DE-A1- 10 134 367
DE-A1-102017 001 878   DE-A1-102017 217 056
US-A1- 2017 210 384   US-A1- 2019 023 268
US-A1- 2019 061 751   US-A1- 2019 302 767

**Description**

TECHNICAL FIELD

The present invention relates to a method for providing a positive decision signal for a vehicle which is about to perform a traffic scenario action, such as entering a crossing, entering a highway and/or changing lanes. The present invention further relates to a method for automatically performing a traffic scenario action of a vehicle. The present invention further relates to a method for automatically avoiding performing a traffic scenario action of a vehicle. The present invention further relates to a control unit, a vehicle, a computer program and/or to a computer-readable medium.

The invention can be applied in heavy-duty vehicles, such as trucks, buses and construction equipment. Although the invention will be described with respect to a heavy-duty truck, the invention is not restricted to this particular vehicle, but may also be used in other vehicles such as light-weight trucks, articulated haulers, excavators, wheel loaders and backhoe loaders, and also passenger cars.

BACKGROUND

In autonomous driving of a vehicle, an autonomous driving system must provide decisions to perform specific traffic scenario actions, such as changing lanes, entering a highway, entering a crossing etc. As such, in certain traffic scenarios which the autonomous vehicle is subjected to, the autonomous driving system must perform certain traffic scenario actions. In addition, in situations where a driving assistance system in a vehicle supports a driver, the driving assistance system may in a similar manner support the driver to take the decisions, such as providing a visual, tactile and/or audible signal to the driver that the traffic scenario action can be initiated.

In order for the system to take such a decision, information about the surrounding environment is required. This information may for example comprise information about surrounding road users, such as vehicles which are driving in the same lane, in neighboring lanes, and/or which are approaching a crossing.

US 2018/0201272 discloses a vehicle control apparatus and method which detects a nearby vehicle that travels near a host vehicle, estimates a positional change of the detected nearby vehicle and derives a lane changeable period during which lane change is possible.

According to its abstract, DE102017001878A1 relates to a method and control unit for facilitating exit from a vehicle platoon of a vehicle included in the platoon by changing lanes. The method includes: calculating a first length of time required for the vehicle to change lanes; detecting an approaching vehicle in the target lane; estimating a second length of time that the detected approaching vehicle in the target lane needs to catch up with the vehicle; and outputting the information related to the lane change to the driver of the vehicle based on the time difference between the calculated first time period and the estimated second time period.

According to its abstract, WO2017200757A1 relates to a crosswalk navigation system for operating an automated vehicle in an intersection and includes an intersection-detector, a pedestrian-detector, and a controller. The intersection-detector is suitable for use on a host-vehicle. The intersection-detector is used to determine when the host-vehicle is proximate to an intersection and determine when the intersection includes a cross-walk. The pedestrian-detector is suitable for use on the host-vehicle. The pedestrian-detector is used to determine a motion-vector of a pedestrian relative to the cross-walk. The controller is in communication with the intersection-detector and the pedestrian-detector. The controller is configured to determine a travel-path of the host-vehicle through the intersection, determine when the pedestrian will pass through an intersect-location where the travel-path intersects the cross-walk based on the motion-vector, and operate the host-vehicle to enter the intersection before the pedestrian passes through the intersect-location and to arrive at the intersect-location after the pedestrian passes through the intersect-location.

Even though the prior art may disclose to assess when a lane change may be performed by taking nearby vehicles into account, there is still a strive towards developing improved and more cost-efficient technology for traffic scenario decision making, particularly for autonomous vehicles.

SUMMARY

In view of the above, an object of the invention is to provide a method for providing a positive decision signal for a vehicle which is about to perform a traffic scenario action which at least in some aspect alleviates at least one of the drawbacks of the prior art, and/or to at least provide a useful alternative. Another object of the invention is to provide a method for automatically performing a traffic scenario action of a vehicle. A further object of the invention is to provide a method for automatically avoiding performing a traffic scenario action of a vehicle. A yet further object of the invention is to provide a control unit for a vehicle, a vehicle, a computer program and/or a computer-readable medium.

According to a first aspect of the invention, the object is achieved by a method according to claim 1. According to a second aspect of the invention, the object is achieved by a method according to claim 10. According to a third aspect of the invention, the object is achieved by a method according to claim 11. According to a fourth aspect of the invention, the object is achieved by a control unit according to claim 12. According to a fifth aspect of the invention, the object is achieved by a vehicle according to claim 13. According to a sixth and seventh aspect of the invention, the object is achieved by a computer program and a computer-readable medium according to claim 17 and claim 18, respectively.

According to the first aspect thereof, the object is achieved by a method for providing a positive decision signal for a vehicle which is about to perform a traffic scenario action, such as entering a crossing, entering a highway and/or changing lanes, the method comprising:

- receiving information about at least one surrounding road user, which information is indicative of distance to the surrounding road user with respect to the vehicle and at least one of speed and acceleration of the surrounding road user;
- calculating a value based on the received information;
- providing the positive decision signal to perform the traffic scenario action when the calculated value is fulfilling a predetermined condition, wherein the value is calculated based on an assumption that the surrounding road user will react on the traffic scenario action by changing its acceleration, wherein the surrounding road user is a predefined virtual surrounding road user and the predetermined condition is defined by a threshold value which is indicative of an acceleration limit for the surrounding road user.

By the provision of the invention as disclosed herein, an improved and more cost-efficient method for providing a positive decision signal for a vehicle may be achieved. In fact, the inventors have realized that a positive decision signal to perform a traffic scenario action may be obtained in an improved manner which requires fewer and/or more simplified calculations. This is achieved in that the positive decision signal can be obtained by calculating a value, which preferably is a numeric value, based on the above mentioned information of the surrounding road user. This value is then compared with a predetermined condition. In other words, rather than using a more complex decision making process, the present invention turns the decision making process into a threshold comparison for taking the decision. Preferably, a value is calculated for each surrounding road user, wherein the positive decision signal is provided when each calculated value is fulfilling the predetermined condition. Further, the inventors have also realized that by the provision of the present invention, positive decision signals may be provided more often without compromising with safety. In fact, the present invention is also based on the realization that surrounding road users may react on the performed traffic scenario action made by the vehicle, such as entering a crossing and/or changing lanes. For example, if the vehicle is a heavy-duty vehicle, in order for the vehicle to be able to enter the crossing and/or changing lanes, surrounding road users may need to support the vehicle by reacting on the traffic scenario action by changing their acceleration. Hence, this may be especially advantageous if the vehicle is a heavy-duty vehicle which is not able to quickly enter the crossing and/or quickly adapt its speed to the speed of a surrounding road user in a nearby lane during a lane change. The acceleration change may be that the surrounding road user brakes or increases its speed to support the vehicle during the traffic scenario action. For example, if the surrounding road user is approaching a crossing it may initiate braking when it recognizes that the vehicle enters the crossing. As another example, if the surrounding road user is driving in a nearby lane to a lane in which the vehicle is driving, the surrounding road user may increase or reduce its speed when the vehicle initiates a lane change to the nearby lane in order to avoid or reduce the risk of collision.

The positive decision signal is preferably a discrete decision signal, i.e. it may relate to an isolated, or specific traffic scenario, such as entering a crossing, entering a highway and/or changing lanes, and may therefore not relate to continuous decision making, such as continuous control of acceleration and steering of the vehicle.

Optionally, the value may further be calculated based on the assumption that the surrounding road user will react on the traffic scenario action by changing its acceleration after a reaction time. Thereby a more correct assumption may be made, which also takes into account that it may take a period of time from that the traffic scenario action is initiated until the surrounding road user reacts on the traffic scenario action. For example, if the surrounding road user is a vehicle driven by a human driver, it will likely take some time for the human driver to realize that the vehicle has initiated the traffic scenario action. Even in the case when the surrounding road user is not driven by a human driver, the system controlling the surrounding road user may also have a time period until it reacts on the traffic scenario action initiated by the vehicle. Purely by way of example, the reaction time may be a predetermined reaction time, e.g. a reaction time based on information indicative of how long time it may take for a human driver to react on a traffic scenario action. Alternatively, or as a complement, the reaction time may be variable, depending on factors such as type of surrounding road user, type of driver (e.g. human and/or autonomous system), type of surrounding condition, e.g. weather condition and/or time of day etc.

Optionally, the value may further be calculated based on the assumption that the surrounding road user will react on the traffic scenario action by changing its acceleration to an acceleration profile having a constant acceleration. Thereby a more simplified calculation may be performed, implying e.g. a reduced need of calculation capacity.

Optionally, the value may further be calculated based on the assumption that the surrounding road user will react on the traffic scenario action by changing its acceleration to an acceleration profile having a variable acceleration. Thereby a more realistic assumption may be performed. For example, the surrounding road user may react by first braking with a rather low braking force, and then increase the braking force as the surrounding road user approaches the vehicle, or vice versa.

Optionally, the method may further comprise providing a negative decision signal not to perform the traffic scenario action when the calculated value is not fulfilling the predetermined condition.

According to the invention, the predetermined condition is defined by a threshold value which is indicative of an acceleration limit for the surrounding road user. As such, the calculated value may correspond to a required acceleration for the surrounding road user in order not to collide with, or come too close to, the vehicle which is performing the traffic scenario action, whereby the required acceleration shall fulfill the predetermined condition defined by the threshold value which is indicative of the acceleration limit for the surrounding road user.

Optionally, the threshold value may be variable depending on at least one factor, such as any one of speed of the surrounding road user, type of surrounding road user, ambient weather conditions with respect to the vehicle and a state of the surrounding road user, such as a state where a turning indicator is active.

According to the invention, the surrounding road user is a predefined virtual surrounding road user. A "virtual surrounding road user" is herein meant a surrounding road user which is not a real road user, i.e. an imaginary surrounding road user. For example, a perception sensor of the vehicle may only be able to detect objects at a maximum distance from the vehicle, such as 150 meters from the vehicle. Therefore, if a perception sensor of the vehicle is not able to detect any surrounding road user before performing a traffic scenario action, the method may be used by calculating the value based on a virtual surrounding road user which for example is located 150 meters away from the vehicle and is driving at an assumed speed, such as at a current speed limit on the current road section. Thereby, the method may be able to efficiently provide a positive control signal without compromising with safety.

Optionally, the information about the at least one surrounding road user may be received by any one of a perception sensor of the vehicle, a V2X (vehicle-to-everything) communication interface and a remote perception sensor which is in communicative contact with the vehicle. The perception sensor may for example be any one of a LIDAR (light detection and ranging) sensor, ultrasonic sensor, RADAR (radio detection and ranging) sensor, camera or the like. The vehicle may be equipped with more than one such sensor, and/or with a combination of such sensors. Further, the sensor information may be combined with other information, such as combined with information from the aforementioned V2X communication interface and the remote perception sensor. Thereby, according to an example embodiment, the information may be fused in a fusion system in order to provide more accurate information. The fusion system may for example use a Kalman filter, or an extended Kalman filter.

Optionally, the method may be used as a safety control method for an autonomous vehicle, wherein the autonomous vehicle is primarily performing traffic scenario actions by use of a primary autonomous vehicle control method, and wherein a traffic scenario action permitted to be performed by the primary autonomous vehicle control method is allowed to be performed if also the positive decision signal is provided. Thereby, the method may advantageously be used as a "back-up" method for the primary autonomous vehicle control method, implying improved and cost-efficient redundancy for the autonomous vehicle. Redundant systems in decision making might be necessary in order to reach high safety integrity levels as described in the ISO26262 standard.

Optionally, the calculated value may further be based on auxiliary information relating to the traffic scenario action, such as any one of shape and/or dimension(s) of a crossing, a road lane and a neighbouring road lane.

According to the second aspect thereof, the object is achieved by a method for automatically performing a traffic scenario action of a vehicle, comprising:

- receiving a positive decision signal to perform the traffic scenario action, which positive decision signal has been provided according to the method of any one of the embodiments of the first aspect of the invention; and
- automatically performing the traffic scenario action.

Advantages and effects provided by the second aspect of the invention are largely analogous to the advantages and effects provided by the first aspect of the invention. It shall also be noted that all embodiments of the second aspect of the invention are applicable to and combinable with all embodiments of the first aspect of the invention and vice versa.

According to the third aspect thereof, the object is achieved by a method for automatically avoiding performing a traffic scenario action of a vehicle, comprising:

- receiving a negative decision signal not to perform the traffic scenario action, which negative decision signal has been provided according to the method of an embodiment of the first aspect of the invention; and
- automatically avoiding performing the traffic scenario action.

Advantages and effects provided by the third aspect of the invention are largely analogous to the advantages and effects provided by the first aspect of the invention. It shall also be noted that all embodiments of the third aspect of the invention are applicable to and combinable with all embodiments of the first and second aspects of the invention and vice versa.

According to the fourth aspect thereof, the object is achieved by a control unit for a vehicle which is configured to perform the steps of any one of the embodiments of any one of the first, second and third aspects of the invention.

Advantages and effects provided by the fourth aspect of the invention are largely analogous to the advantages and effects provided by the first, second and third aspects of the invention. It shall also be noted that all embodiments of the fourth aspect of the invention are applicable to and combinable with all embodiments of the first, second and third aspects of the invention and vice versa.

According to the fifth aspect thereof, the object is achieved by a vehicle comprising the control unit according to any one of the embodiments of the fourth aspect of the invention.

Advantages and effects provided by the fifth aspect of the invention are largely analogous to the advantages and effects provided by the fourth aspect of the invention. It shall also be noted that all embodiments of the fifth aspect of the invention is applicable to and combinable with all embodiments of the fourth aspect of the invention and vice versa.

Optionally, the vehicle may be a fully autonomous or semi-autonomous vehicle. A fully autonomous vehicle may be defined as a vehicle in which steering, braking and/or acceleration can be automatically controlled without any direct human input. A semi-autonomous vehicle may be defined as a vehicle in which at least one of steering, braking and acceleration can be automatically controlled for at least a limited period of time, or at least for a limited amount of traffic scenarios, without any direct human involvement, and/or a semi-autonomous vehicle may be defined as a vehicle in which at least one of steering, braking and acceleration is remotely controlled for at least a limited period of time, or at least for a limited amount of traffic scenarios. Further, the positive decision signal, or the positive and negative decision signals, may also be provided to a driver of the vehicle as a driver support system. For example, as mentioned in the above, the driver may be notified by a light signal, an audible signal etc.

Optionally, the vehicle may be a road vehicle, such as a public road vehicle, for example a truck, a bus and a construction equipment vehicle adapted to be driven on a road. The road may thus be a public road. More specifically, the inventors have realized that the present invention is especially advantageous for public road vehicles which may experience a large variety of different traffic scenarios, wherein the present invention provides a cost-efficient method for the vehicle which may require fewer and/or less complex calculations for providing the positive decision signal, or the positive and the negative decision signal.

Optionally, the vehicle may be a heavy-duty vehicle which has a minimum weight of at least 5000 kg, such as 30.000 kg. The weight is preferably a weight of the vehicle when being unloaded, such as kerb weight or dry weight of the vehicle. The present invention has been found to be especially advantageous for heavy-duty vehicles since a heavy-duty vehicle may not be able to accelerate as fast as e.g. a passenger car and therefore may have difficulties in adapting its speed to the prevailing traffic flow.

BRIEF DESCRIPTION OF THE DRAWINGS

With reference to the appended drawings, below follows a more detailed description of embodiments of the invention cited as examples.

In the drawings:

Fig. 1 shows a side view of a heavy-duty truck according to an example embodiment of the present invention;

Fig. 2 shows a schematic view of a traffic scenario according to an example embodiment of the present invention;

Fig. 3 shows another schematic view of a traffic scenario according to an example embodiment of the present invention;

Fig. 4 shows a graph-diagram for illustrating an embodiment of the present invention;

Fig. 5 shows another graph-based diagram for illustrating an embodiment of the present invention; and

Fig. 6a-c show flowcharts of methods according to example embodiments of the present invention

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

DETAILED DESCRIPTION OF EXAMPLE EMBODIMENTS OF THE INVENTION

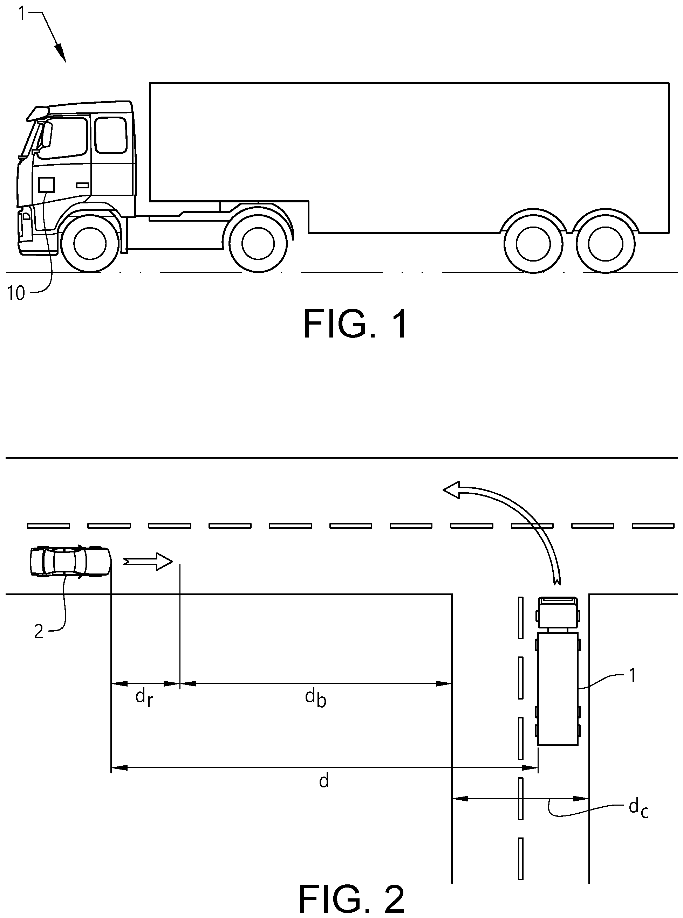

Fig. 1 shows a heavy-duty truck 1, which here is a vehicle combination including the truck 1 and a connected trailer. Even though the following embodiments of the invention will be described with respect to this type of vehicle, it shall be understood that the invention may also be used for other vehicles, such as a bus, a working machine, such as a wheel loader or any other construction equipment vehicle. The invention may also be used for lighter vehicles, such as passenger cars. The heavy-duty truck 1 is in the shown embodiment an autonomous vehicle. The vehicle 1 comprises a control unit 10, which preferably is an electronic control unit, for performing any one of the embodiments of the methods as disclosed herein.

Now, with respect to fig. 2, fig. 4 and fig. 6a, an example embodiment of the present invention will be described. Fig. 2 shows a schematic view from above of a traffic scenario where a vehicle 1, which may be the truck as shown in fig. 1, is about to enter a crossing and enter a main road section from a side road section. This is indicated by the arrow bending towards the left in fig. 2, indicative of that the vehicle 1 is about to make a left-turn and drive in on the main road section. A surrounding road user 2 which is driving on the main road section is also approaching the crossing at a speed v, indicated by the arrow proximate the surrounding road user 2 which is pointing in the direction towards the crossing, so that the vehicle 1 and the surrounding road user 2 risk colliding if the vehicle 1 makes the left-turn. The left-turn is thus in this embodiment a traffic scenario action which the vehicle 1 is about to perform.

By use of e.g. a perception sensor provided on the vehicle 1 (not shown), the distance d to the surrounding road user 2 with respect to the vehicle 1 may be determined. Further, the perception sensor may also determine the speed v and/or the acceleration of the surrounding road user 2. As mentioned hereinabove, the speed and/or the distance may be determined also by other means, or by a combination of different means, such as by the perception sensor and by V2X information. For example, the V2X information may be V2V (vehicle-to-vehicle) information, wherein the vehicle 1 and the surrounding road user 2 are able to communicate wirelessly and share information between each other.

According to an example embodiment, also auxiliary information relating to the traffic scenario action may be obtained, such as a dimension of the crossing $d_c$ as shown in fig. 2. The dimension of the crossing $d_c$ is here indicative of a width of the crossing.

The vehicle 1 is thus about to perform a traffic scenario action, i.e. entering the crossing by making a left-turn. The traffic scenario action will be performed when a positive decision signal has been provided, wherein the positive decision signal is provided by the following method:

S1: receiving information about at least one surrounding road user 2, which information is indicative of distance d to the surrounding road user with respect to the vehicle 1 and at least one of speed v and acceleration of the surrounding road user 2;
S2: calculating a value based on the received information;
S3: providing the positive decision signal to perform the traffic scenario action when the calculated value is fulfilling a predetermined condition, wherein the value is calculated based on an assumption that the surrounding road user 2 will react on the traffic scenario action by changing its acceleration.

In the embodiment shown in fig. 2, the value is further calculated based on the assumption that the surrounding road user will react on the traffic scenario action by changing its acceleration after a reaction time $t_r$. This is indicated in fig. 2 by the distance $d_r$ which corresponds to the distance the surrounding road user 2 will move towards the crossing until it starts to brake in order to avoid e.g. a collision with the vehicle 1. The distance $d_b$ in fig. 2 defines the braking distance for stopping before the crossing.

By use of the above mentioned method, it can be calculated how hard the surrounding road user would have to brake to stop before the crossing. If it is desired for the surrounding road user 2 to stop before the crossing, the surrounding road user 2 may have approximately the distance $d - d_c$ to stop. A correction may be performed for example in order to compensate for that the vehicle 1 is located a certain distance within the crossing, and/or compensate for that the vehicle 1 has a certain width.

By use of the above mentioned information, the following equation may be provided:

$$d - d_c > d_b + d_r$$

$$d > d_c + \frac{v^2}{-2a} + v t_r$$

$$a < -\frac{v^2}{2(d - d_c - vt_r)}$$

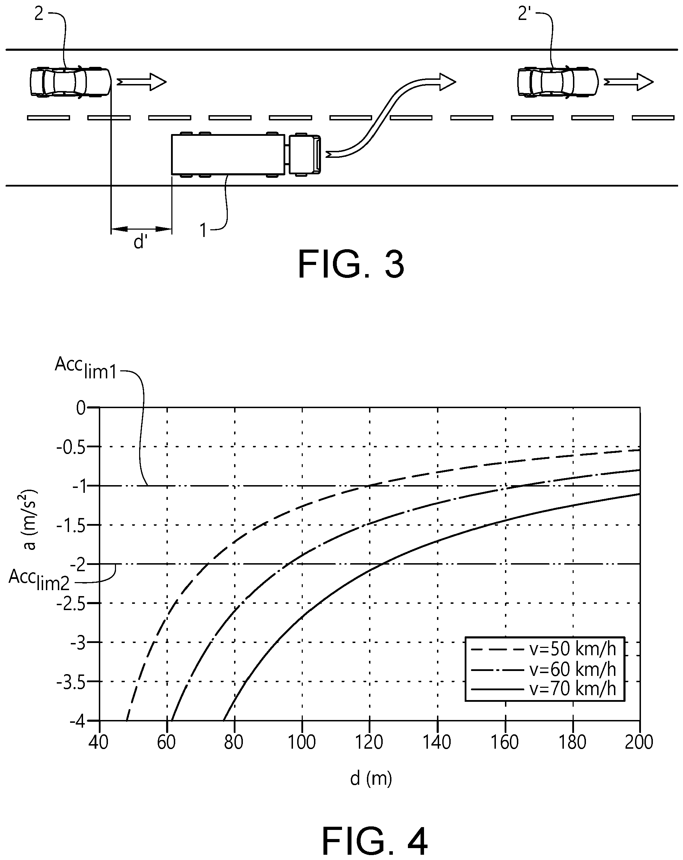

Consequently, the distance $d-d_c$ should be larger than the distance $d_b + d_r$. Further, the distance $d_r$ may be calculated as the speed v times the reaction time $t_r$. The braking distance $d_b$ may be calculated as the speed v in square divided by the braking acceleration a times 2. By use of this equation, a value a can thus be calculated which corresponds to the required acceleration for the surrounding road user 2 to be able to stop before the crossing. This means that the surrounding road user 2 would have to brake with at least an acceleration a to stop before the crossing. This required acceleration a can then be compared to a threshold value to decide if the positive decision signal should be provided to allow the traffic scenario action to be performed by the vehicle 1, i.e. to make the left-turn. Fig. 4 shows a graph showing the needed acceleration value, i.e. threshold values, for different distances d for a few speeds v of the surrounding road user 2 and with $d_c$ = 10 m and a reaction time $t_r$ = 1 second. More specifically, the three curves show speeds v being 50, 60 or 70 km/h. The threshold values $Acc_{lim1}$ and $Acc_{lim2}$ correspond to two different example threshold values, either approximately -1m/s$^2$ or -2 m/s$^2$. If $Acc_{lim1}$ is used, an approaching surrounding road user 2 at 50 km/h would have to be at a distance d of about 120 m or more from the vehicle 1 in order for the vehicle 1 to start driving into the main road section, i.e. perform the left-turn. Corresponding distances for 60 km/h and 70 km/h are about 165 m and more than 200 m. If $Acc_{lim2}$ is used instead as the threshold value, i.e. a less conservative decision making, the distances needed for 50, 60 and 70 km/h are about 72, 95 and 123 m respectively. The above example shows when it is assumed that the surrounding road user 2 reacts on the traffic scenario action by changing its acceleration to an acceleration profile having a constant acceleration. A different calculation would be required if it instead was assumed that the surrounding road user 2 will react on the traffic scenario action by changing its acceleration to an acceleration profile having a variable acceleration. Such calculation may not be more complicated, but may increase the complexity of the calculation, and may require more calculations, which may take longer time to perform.

The predetermined condition is in the above thus defined by the threshold values $Acc_{lim1}$ and/or $Acc_{lim2}$ which are acceleration limits for the surrounding road user 2. Also other threshold values may be used for defining the predetermined condition, as long as the threshold values are indicative of an acceleration limit for the surrounding road user 2. As an example, the predetermined condition may be defined by a threshold value which corresponds to a time for the surrounding road user to stop before the crossing.

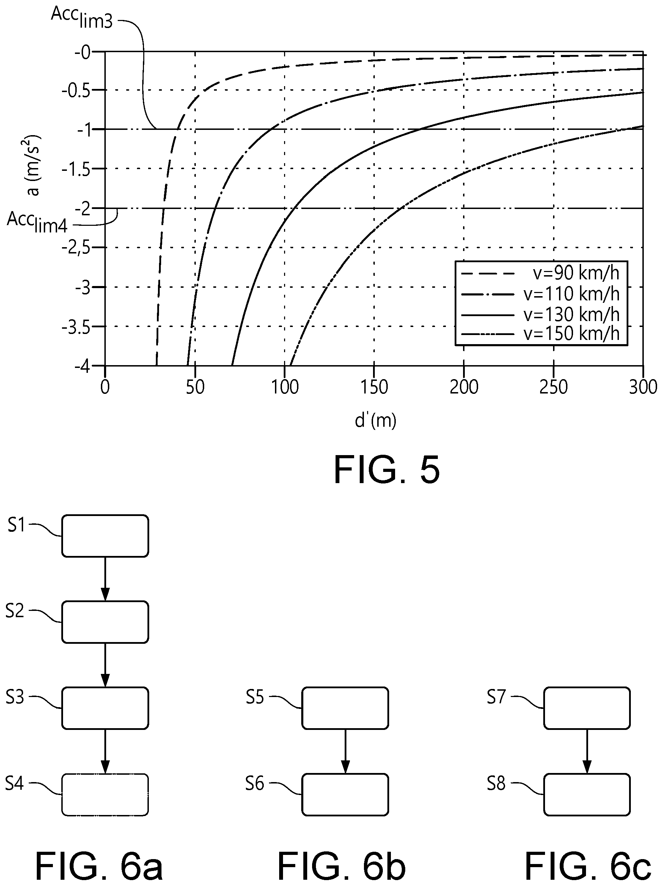

The method may further comprise an optional step S4 (indicated by the box with dashed lines in fig. 6a) of providing a negative decision signal not to perform the traffic scenario action when the calculated value is not fulfilling the predetermined condition.

With respect to fig. 3, fig. 5 and fig. 6a, another example embodiment of the present invention will be described. Fig. 3 shows a schematic view from above of a traffic scenario where a vehicle 1, which may be the truck as shown in fig. 1, is about to change lanes and drive in to a neighbouring lane. This is indicated by the arrow pointing from the vehicle 1 into the neighbouring lane in fig. 3, indicative of that the vehicle 1 is about to change lanes. A surrounding road user 2 which is driving in the neighbouring lane is located behind the vehicle 1 at a distance d' and driving at a speed $v_t$, indicated by the arrow proximate the surrounding road user 2 which is pointing in the direction towards the right in the figure. Another surrounding road user 2' is also driving in the neighbouring lane, but in front of the vehicle 1. When performing a lane change, it is assumed that the surrounding road user 2 will react on the traffic scenario action by changing its acceleration. In this embodiment, it is assumed that the surrounding road user 2 will react by changing the acceleration after a reaction time $t_r$. The acceleration corresponds to the surrounding road user 2 braking in order not to risk colliding or coming too close to the vehicle 1. The vehicle 1 is driving at speed $v_e$. After the braking phase of the surrounding road user 2, it is desired that a minimum gap distance is not exceeded. This gap may be based on a minimum desired time gap $t_g$ and may be calculated as $v_e$ times $t_g$. It is in this example further assumed that the vehicle 1 will drive at constant speed through the lane change.

For the resulting gap distance to be larger than required the following equation should be fulfilled:

$$d' - t_r(v_t - v_e) - \frac{v_t + v_e}{2}\frac{v_t - v_e}{-a} + v_e\frac{v_t - v_e}{-a} > v_e t_g$$

$$d' - t_r(v_t - v_e) - \left(\frac{v_t + v_e}{2} - v_e\right)\frac{v_t - v_e}{-a} > v_e t_g$$

$$d' - t_r(v_t - v_e) - \left(\frac{v_t - v_e}{2}\right)\frac{v_t - v_e}{-a} > v_e t_g$$

$$d' - t_r(v_t - v_e) - \frac{(v_t - v_e)^2}{-2a} > v_e t_g$$

$$d' - t_r(v_t - v_e) - v_e t_g > \frac{(v_t - v_e)^2}{-2a}$$

$$a < -\frac{(v_t - v_e)^2}{2(d' - t_r(v_t - v_e) - v_e t_g)}$$

This equation provides a threshold value defining the predetermined condition, which threshold value is an acceleration limit for the surrounding road user 2. Fig. 5 shows a graph with examples for the case when $v_e$ = 70 km/h, $t_r$ = 1 second and $t_g$ = 1 second for different $v_t$, i.e. $v_t$ is any one of 90, 110, 130 or 150 km/h.

In the shown example, two different threshold values are shown for a, $Acc_{lim3}$ and $Acc_{lim4}$ which are -1 m/s$^2$ and -2 m/s$^2$, respectively. As can be seen, the required distance d' is very big when the relative speed is high. For the case when $v_t$ = 90 km/h, the threshold distances d' are about 30 and 40 m. For $v_t$ = 110 km/h, the threshold distances d' are about 60 and 90 m. For $v_t$ = 130 km/h, the threshold distances d' are about 110 and 175 m. For $v_t$ = 150 km/h, the threshold distances d' are about 165 and 290 m.

A similar calculation as in the above may also be performed for the other surrounding road user 2' which is located in front of the vehicle 1. However, in this case the other surrounding road user 2' may rather need to change its acceleration by increasing its speed in order to support the vehicle 1 to perform the lane change.

With respect to fig 6b, a flowchart of an example embodiment of a method according to the second aspect of the invention is shown. The method is a method for automatically performing a traffic scenario action of a vehicle 1, and comprises:

> S5: receiving a positive decision signal to perform the traffic scenario action, which positive decision signal has been provided according to the method of any one of the embodiments of the first aspect of the invention; and
> S6: automatically performing the traffic scenario action.

With respect to fig 6c, a flowchart of an example embodiment of a method according to the third aspect of the invention is shown. The method is a method for automatically avoiding performing a traffic scenario action of a vehicle 1, and comprises:

> S7: receiving a negative decision signal not to perform the traffic scenario action, which negative decision signal has been provided according to an embodiment of the method of the first aspect of the invention; and
> S8: automatically avoiding performing the traffic scenario action.

The control unit 10 as mentioned in the above may be used for performing the methods as disclosed herein. With respect to the second aspect of the invention, the control unit 10 may be configured to automatically perform the traffic scenario action by issuing a signal to e.g. a powertrain (not shown) of the vehicle 1. The issued signal to the powertrain may for example activate the powertrain so that the vehicle 1 starts moving and/or accelerates. The issued signal may also trigger a braking system and/or a steering system of the vehicle 1 to perform the traffic scenario action. In a similar manner, with respect to the third aspect of the invention, the control unit 10 may be configured to automatically avoid performing the traffic scenario action by issuing another signal to e.g. the powertrain.

The control unit 10 may include a microprocessor, microcontroller, programmable digital signal processor or another programmable device. The control unit 10 may also, or instead, include an application specific integrated circuit, a programmable gate array or programmable array logic, a programmable logic device, or a digital signal processor. Where the control unit 10 includes a programmable device such as the microprocessor, microcontroller or programmable digital signal processor mentioned above, the processor may further include computer executable code that controls operation of the programmable device. The control unit 10 may comprise embedded hardware, sometimes with integrated software, where the hardware show close physical relationship. Examples of physical relationships are: shared casing and components mounted on one or several circuit boards. It shall be noted that the control unit 10 may be formed by one or more connected sub control units, or equivalent computer resources.

It is to be understood that the present invention is not limited to the embodiments described above and illustrated in the drawings; rather, the skilled person will recognize that many changes and modifications may be made within the scope of the appended claims.

## Claims

1. A method for providing a positive decision signal for a vehicle (1) which is about to perform a traffic scenario action, such as entering a crossing, entering a highway and/or changing lanes, the method comprising:

   - receiving (S1) information about at least one surrounding road user (2, 2'), which information is indicative of distance (d, d') to the surrounding road user with respect to the vehicle and at least one of speed and acceleration of the surrounding road user;
   - calculating (S2) a value based on the received information;
   - providing (S3) the positive decision signal to perform the traffic scenario action when the calculated value is fulfilling a predetermined condition, wherein the value is calculated based on an assumption that the surrounding road user will react on the traffic scenario action by changing its acceleration, **characterized in that,** the surrounding road user is a predefined virtual surrounding road user and the predetermined condition is defined by a threshold value ($Acc_{lim1}$, $Acc_{lim2}$, $Acc_{lim3}$, $Acc_{lim4}$) which is indicative of an acceleration limit for the surrounding road user.

2. The method according to any one of the preceding claims, wherein the value is further calculated based on the assumption that the surrounding road user will react on the traffic scenario action by changing its acceleration after a reaction time.

3. The method according to any one of the preceding claims, wherein the value is further calculated based on the assumption that the surrounding road user will react on the traffic scenario action by changing its acceleration to an acceleration profile having a constant acceleration.

4. The method according to any one of claims 1 or 2, wherein the value is further calculated based on the assumption that the surrounding road user will react on the traffic scenario action by changing its acceleration to an acceleration profile having a variable acceleration.

5. The method according to any one of the preceding claims, further comprising providing (S4) a negative decision signal not to perform the traffic scenario action when the calculated value is not fulfilling the predetermined condition.

6. The method according to any one of the preceding claims, wherein the threshold value is variable depending on at least one factor, such as any one of speed of the surrounding road user, type of surrounding road user, ambient weather conditions with respect to the vehicle and a state of the surrounding road user, such as a state where a turning indicator is active.

7. The method according to any one of the preceding claims, wherein the information about the at least one surrounding road user is received by any one of a perception sensor of the vehicle, a V2X communication interface and a remote perception sensor which is in communicative contact with the vehicle.

8. The method according to any one of the preceding claims, wherein the method is used as a safety control method for an autonomous vehicle, wherein the autonomous vehicle is primarily performing traffic scenario actions by use of a primary autonomous vehicle control method, and wherein a traffic scenario action permitted to be performed by the primary autonomous vehicle control method is allowed to be performed if also the positive decision signal is provided.

9. The method according to any one of the preceding claims, wherein the calculated value is further based on auxiliary information relating to the traffic scenario action, such as any one of shape and/or dimension(s) ($d_c$) of a crossing, a road lane and a neighbouring road lane.

10. A method for automatically performing a traffic scenario action of a vehicle, comprising:

- providing (S5) a positive decision signal to perform the traffic scenario action, which positive decision signal has been provided according to the method of any one of claims 1-4 or 6-9; and
- automatically performing (S6) the traffic scenario action.

**11.** A method for automatically avoiding performing a traffic scenario action of a vehicle, comprising:

- providing (S7) a negative decision signal not to perform the traffic scenario action, which negative decision signal has been provided according to the method of claim 5; and
- automatically avoiding performing (S8) the traffic scenario action.

**12.** A control unit (10) for a vehicle which is configured to perform the steps of any one of claims 1-11.

**13.** A vehicle (1) comprising the control unit according to claim 12.

**14.** The vehicle according to claim 13, wherein the vehicle is a fully autonomous or semi-autonomous vehicle.

**15.** The vehicle according to any one of claims 13-14, wherein the vehicle is a road vehicle, such as a public road vehicle, for example a truck, a bus and a construction equipment vehicle adapted to be driven on a road.

**16.** The vehicle according to any one of claims 13-15, wherein the vehicle is a heavy-duty vehicle which has a minimum weight of at least 5000 kg, such as 30.000 kg.

**17.** A computer program comprising program code means for performing the steps of any of claims 1-11, when said program is run on a computer.

**18.** A computer readable medium carrying a computer program comprising program code means for performing the steps of any of claim 1-11, when said program product is run on a computer.


**Patentansprüche**

**1.** Verfahren zum Bereitstellen eines positiven Entscheidungssignals für ein Fahrzeug (1), das im Begriff ist, eine Verkehrsszenarioaktion durchzuführen, wie etwa ein Einfahren in eine Kreuzung, das Einfahren in eine Autobahn und/oder ein Wechseln von Spuren, das Verfahren umfassend:

- Empfangen (S1) von Informationen über mindestens einen umgebenden Verkehrsteilnehmer (2, 2'), wobei die Informationen einen Abstand (d, d') zu dem umgebenden Verkehrsteilnehmer hinsichtlich des Fahrzeugs und mindestens eine von einer Geschwindigkeit und einer Beschleunigung des umgebenden Verkehrsteilnehmers angeben;
- Berechnen (S2) eines Wertes basierend auf den empfangenen Informationen;
- Bereitstellen (S3) des positiven Entscheidungssignals, um die Verkehrsszenarioaktion durchzuführen, wenn der berechnete Wert eine zuvor bestimmte Bedingung erfüllt, wobei der Wert basierend auf einer Annahme berechnet wird, dass der umgebende Verkehrsteilnehmer auf die Verkehrsszenarioaktion durch Änderung seiner Beschleunigung reagieren wird, **dadurch gekennzeichnet, dass** der umgebende Verkehrsteilnehmer ein zuvor definierter virtueller umgebender Verkehrsteilnehmer ist und die zuvor bestimmte Bedingung durch einen Schwellenwert ($Acc_{lim1}$, $Acc_{lim2}$, $Acc_{lim3}$, $Acc_{lim4}$) definiert ist, der ein Beschleunigungslimit für den umgebenden Verkehrsteilnehmer angibt.

**2.** Verfahren nach einem der vorstehenden Ansprüche, wobei der Wert ferner basierend auf der Annahme berechnet wird, dass der umgebende Verkehrsteilnehmer auf die Verkehrsszenarioaktion durch Änderung seiner Beschleunigung nach einer Reaktionszeit reagieren wird.

**3.** Verfahren nach einem der vorstehenden Ansprüche, wobei der Wert ferner basierend auf der Annahme berechnet wird, dass der umgebende Verkehrsteilnehmer auf die Verkehrsszenarioaktion durch Änderung seiner Beschleunigung auf ein Reaktionsprofil reagieren wird, das eine konstante Beschleunigung aufweist.

**4.** Verfahren nach einem der Ansprüche 1 bis 2, wobei der Wert ferner basierend auf der Annahme berechnet wird, dass der umgebende Verkehrsteilnehmer auf die Verkehrsszenarioaktion durch Änderung seiner Beschleunigung auf ein Beschleunigungsprofil reagieren wird, das eine variable Beschleunigung aufweist.

5. Verfahren nach einem der vorstehenden Ansprüche, ferner umfassend Bereitstellen (S4) eines negativen Entscheidungssignals, um die Verkehrsszenarioaktion nicht durchzuführen, wenn der berechnete Wert die zuvor bestimmte Bedingung nicht erfüllt.

6. Verfahren nach einem der vorstehenden Ansprüche, wobei der Schwellenwert abhängig von mindestens einem Faktor variabel ist, wie etwa einem beliebigen von der Geschwindigkeit des umgebenden Verkehrsteilnehmers, einer Art des umgebenden Verkehrsteilnehmers, den Umgebungswetterbedingungen hinsichtlich des Fahrzeugs und einem Zustand des umgebenden Verkehrsteilnehmers, wie etwa einem Zustand, in dem ein Fahrtrichtungsanzeiger aktiv ist.

7. Verfahren nach einem der vorstehenden Ansprüche, wobei die Informationen über den mindestens einen umgebenden Verkehrsteilnehmer durch ein beliebiges von einem Wahrnehmungssensor des Fahrzeugs, einer V2X-Kommunikationsschnittstelle und einem entfernten Wahrnehmungssensor empfangen werden, der in Kommunikationskontakt mit dem Fahrzeug ist.

8. Verfahren nach einem der vorstehenden Ansprüche, wobei das Verfahren als ein Sicherheitssteuerungsverfahren für ein autonomes Fahrzeug verwendet wird, wobei das autonome Fahrzeug primär Verkehrsszenarioaktionen durch Verwendung eines primären Steuerungsverfahrens für das autonome Fahrzeug durchführt, und wobei eine Verkehrsszenarioaktion, die durch das primäre Steuerungsverfahren für das autonome Fahrzeug durchgeführt werden darf, erlaubterweise durchgeführt wird, falls ebenso das positive Entscheidungssignal bereitgestellt wird.

9. Verfahren nach einem der vorstehenden Ansprüche, wobei der berechnete Wert ferner auf Hilfsinformationen basiert, die sich auf die Verkehrsszenarioaktion beziehen, wie etwa ein beliebiges von einer Form und/oder Abmessung(en) ($d_c$) einer Kreuzung, einer Fahrspur und einer benachbarten Fahrspur.

10. Verfahren zum automatischen Durchführen einer Verkehrsszenarioaktion eines Fahrzeugs, umfassend:

 - Bereitstellen (S5) eines positiven Entscheidungssignals, um die Verkehrsszenarioaktion durchzuführen, wobei das positive Entscheidungssignal gemäß dem Verfahren nach einem der Ansprüche 1 bis 4 oder 6 bis 9 bereitgestellt wurde; und
 - Automatisches Durchführen (S6) der Verkehrsszenarioaktion.

11. Verfahren zum automatischen Vermeiden des Durchführens einer Verkehrsszenarioaktion eines Fahrzeugs, umfassend:

 - Bereitstellen (S7) eines negativen Entscheidungssignals, um die Verkehrsszenarioaktion nicht durchzuführen, wobei das negative Entscheidungssignal gemäß dem Verfahren nach Anspruch 5 bereitgestellt wurde; und
 - Automatisches Vermeiden des Durchführens (S8) der Verkehrsszenarioaktion.

12. Steuergerät (10) für ein Fahrzeug, das konfiguriert ist, um die Schritte nach einem der Ansprüche 1 bis 11 durchzuführen.

13. Fahrzeug (1), umfassend das Steuergerät nach Anspruch 12.

14. Fahrzeug nach Anspruch 13, wobei das Fahrzeug ein vollständig autonomes oder teilautonomes Fahrzeug ist.

15. Fahrzeug nach einem der Ansprüche 13 bis 14, wobei das Fahrzeug ein Straßenfahrzeug ist, wie etwa ein Fahrzeug für eine öffentliche Straße, z. B. ein Lastkraftwagen, ein Bus und ein Baumaschinenfahrzeug, das angepasst ist, um auf einer Straße zu fahren.

16. Fahrzeug nach einem der Ansprüche 13 bis 15, wobei das Fahrzeug ein Schwerlastfahrzeug ist, das ein Mindestgewicht von mindestens 5000 kg, wie etwa 30.000 kg, aufweist.

17. Computerprogramm, umfassend Programmcodemittel zum Durchführen der Schritte nach einem der Ansprüche 1 bis 11, wenn das Programm auf einem Computer ausgeführt wird.

**18.** Computerlesbares Medium, das ein Computerprogramm enthält, umfassend Programmcodemittel zum Durchführen der Schritte nach einem der Ansprüche 1 bis 11, wenn das Programmprodukt auf einem Computer ausgeführt wird.

**Revendications**

**1.** Procédé permettant de fournir un signal de décision positive à un véhicule (1) qui est sur le point d'exécuter une action de scénario de circulation, telle que s'engager dans un passage à niveau, s'engager sur une autoroute et/ou changer de voie, le procédé comprenant :

- la réception (S1) des informations sur au moins un usager de la route environnant (2, 2'), ces informations indiquant la distance (d, d') de l'usager de la route environnant par rapport au véhicule et au moins l'un parmi la vitesse et l'accélération de l'usager de la route environnant ;
- le calcul (S2) d'une valeur sur la base des informations reçues ;
- la fourniture (S3) du signal de décision positive pour exécuter l'action de scénario de circulation lorsque la valeur calculée remplit une condition prédéterminée, dans lequel la valeur est calculée sur la base d'une hypothèse selon laquelle l'usager de la route environnant réagira à l'action de scénario de circulation en modifiant son accélération, **caractérisé en ce que** l'usager de la route environnant est un usager de la route environnant virtuel prédéfini et que la condition prédéterminée est définie par une valeur seuil ($Acc_{lim1}$, $Acc_{lim2}$, $Acc_{lim3}$, $Acc_{lim4}$) indiquant une limite d'accélération pour l'usager de la route environnant.

**2.** Procédé selon l'une quelconque des revendications précédentes, dans lequel la valeur est en outre calculée sur la base de l'hypothèse selon laquelle l'usager de la route environnant réagira à l'action de scénario de circulation en modifiant son accélération après un certain temps de réaction.

**3.** Procédé selon l'une quelconque des revendications précédentes, dans lequel la valeur est en outre calculée sur la base de l'hypothèse selon laquelle l'usager de la route environnant réagira à l'action de scénario de circulation en modifiant son accélération pour passer à un profil d'accélération présentant une accélération constante.

**4.** Procédé selon l'une quelconque des revendications 1 ou 2, dans lequel la valeur est en outre calculée sur la base de l'hypothèse selon laquelle l'usager de la route environnant réagira à l'action de scénario de circulation en modifiant son accélération en fonction d'un profil d'accélération ayant une accélération variable.

**5.** Procédé selon l'une quelconque des revendications précédentes, comprenant en outre la fourniture (S4) d'un signal de décision négative de ne pas exécuter l'action de scénario de circulation lorsque la valeur calculée ne remplit pas la condition prédéterminée.

**6.** Procédé selon l'une quelconque des revendications précédentes, dans lequel la valeur seuil est variable en fonction d'au moins un facteur, tel qu'un quelconque parmi la vitesse de l'usager de la route environnant, le type d'usager de la route environnant, les conditions météorologiques ambiantes par rapport au véhicule et l'état de l'usager de la route environnant, tel qu'un état dans lequel un indicateur de virage est actif.

**7.** Procédé selon l'une quelconque des revendications précédentes, dans lequel les informations concernant l'au moins un usager de la route environnant sont reçues par l'un quelconque parmi le capteur de perception du véhicule, une interface de communication V2X et un capteur de perception à distance en contact communicatif avec le véhicule.

**8.** Procédé selon l'une quelconque des revendications précédentes, dans lequel le procédé est utilisé comme procédé de contrôle de la sécurité pour un véhicule autonome, dans lequel le véhicule autonome exécute principalement des actions de scénario de circulation au moyen d'une méthode de contrôle de véhicule autonome primaire, et dans lequel une action de scénario de circulation autorisée à être exécutée par le procédé de contrôle de véhicule autonome primaire est autorisée à être exécutée si le signal de décision positive est également fourni.

**9.** Procédé selon l'une quelconque des revendications précédentes, dans lequel la valeur calculée est en outre basée sur des informations auxiliaires relatives à l'action de scénario de circulation, telles qu'une quelconque parmi la forme et/ou les dimensions ($d_c$) d'un croisement, d'une voie de circulation et d'une voie de circulation voisine.

**10.** Procédé d'exécution automatique d'une action de scénario de circulation d'un véhicule, comprenant :

- la fourniture (S5) d'un signal de décision positive pour exécuter l'action de scénario de circulation, ce signal de décision positive ayant été fourni selon le procédé de l'une quelconque des revendications 1 à 4 ou 6 à 9 ; et
- l'exécution automatique (S6) de l'action de scénario de circulation.

**11.** Procédé permettant d'éviter automatiquement l'exécution d'une action de scénario de circulation d'un véhicule, comprenant :

- la fourniture (S7) d'un signal de décision négative de ne pas exécuter l'action de scénario de circulation, ce signal de décision négative ayant été fourni selon le procédé de la revendication 5 ; et
- le fait d'éviter automatiquement l'exécution (S8) de l'action de scénario de circulation.

**12.** Unité de commande (10) pour un véhicule qui est configurée pour exécuter les étapes de l'une quelconque des revendications 1 à 11.

**13.** Véhicule (1) comprenant l'unité de commande selon la revendication 12.

**14.** Véhicule selon la revendication 13, dans lequel le véhicule est entièrement autonome ou semi-autonome.

**15.** Véhicule selon l'une quelconque des revendications 13 et 14, dans lequel le véhicule est un véhicule routier, tel qu'un véhicule routier public, par exemple un camion, un bus et un véhicule de construction adapté pour être conduit sur une route.

**16.** Véhicule selon l'une quelconque des revendications 13 à 15, dans lequel le véhicule est un véhicule lourd dont le poids minimum est d'au moins 5 000 kg, par exemple 30 000 kg.

**17.** Programme informatique comprenant un moyen de code de programme permettant d'exécuter les étapes selon l'une quelconque des revendications 1 à 11, lorsque ledit programme est exécuté sur un ordinateur.

**18.** Support lisible par ordinateur portant un programme informatique comprenant un moyen de code de programme permettant d'exécuter les étapes selon l'une quelconque des revendications 1 à 11, lorsque ledit produit de programme est exécuté sur un ordinateur.

FIG. 1

FIG. 2

FIG. 3

FIG. 4

FIG. 5

FIG. 6a

FIG. 6b

FIG. 6c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180201272 A
- DE 102017001878 A1
- WO 2017200757 A1